# EUROPÄISCHE PATENTSCHRIFT

(11) **EP 2 632 758 B1**
(45) Veröffentlichungstag und Bekanntmachung des Hinweises auf die Patenterteilung: **24.09.2014**
(21) Anmeldenummer: 11772997.0
(22) Anmeldetag: 24.10.2011
(51) Int. Cl.: B60K 26/02

(54) **STELLVORRICHTUNG ZUR LEISTUNGSSTEUERUNG EINES VERBRENNUNGSMOTORS UND VERFAHREN ZUR LEISTUNGSSTEUERUNG DES VERBRENNUNGSMOTORS**
ACTUATION DEVICE FOR CONTROLLING THE POWER OF AN INTERNAL COMBUSTION ENGINE AND METHOD FOR CONTROLLING THE POWER OF THE INTERNAL COMBUSTION ENGINE
DISPOSITIF DE RÉGLAGE DE LA COMMANDE DE PUISSANCE D'UN MOTEUR À COMBUSTION INTERNE ET PROCÉDÉ DE COMMANDE DE PUISSANCE D'UN MOTEUR À COMBUSTION INTERNE

(30) Priorität: 25.10.2010 DE 102010042895
(43) Veröffentlichungstag der Anmeldung: 04.09.2013
(73) Patentinhaber: Frey, Thilo, 50968 Köln (DE)
(72) Erfinder: Frey, Thilo, 50968 Köln (DE)
(74) Vertreter: Jostarndt, Hans-Dieter
(86) Internationale Anmeldenummer: PCT/EP2011/068515
(87) Internationale Veröffentlichungsnummer: WO 2012/055804

(56) Entgegenhaltungen:
- WO-A1-03/029039
- US-B1- 6 536 408
- US-B2- 7 188 546

## Beschreibung

Die Erfindung betrifft eine Stellvorrichtung zur Leistungssteuerung eines Motors. Die Erfindung betrifft ferner ein Verfahren zur Leistungssteuerung eines Verbrennungsmotors.

Die vorliegende Erfindung betrifft eine Stellvorrichtung zur Leistungssteuerung eines Motors, sowie ein Verfahren zur Leistungssteuerung eines Motors, insbesondere eines Verbrennungsmotors für ein Kraftfahrzeug, dessen Geschwindigkeit über eine Kupplung und eine Bremse mit zugeordneten Pedalen sowie über ein Fahrpedal steuerbar ist.

Bei heutigen Fahrzeugen wird üblicherweise die Antriebskraft eines Fahrzeugs mittels des Fahrpedals geregelt, wobei bei modernen Fahrzeugen der Zusammenhand zwischen Fahrpedalstellung und Motorlast im Allgemeinen nicht mehr über eine direkte mechanische Kopplung hergestellt wird. In der Regel steuert ein elektronisches Motorsteuergerät die Motorlast unter Berücksichtigung verschiedener Parameter, wie beispielsweise der Fahrpedalstellung. Bei kontinuierlicher Betätigung des Fahrpedals ausgehend von der Nulllage wird das Antriebsmoment eines Motors entsprechend kontinuierlich erhöht, indem das für den Antrieb verantwortliche Stellelement, z. B. die Drosselklappe bei Ottomotoren, angesteuert wird. In der Nulllage selbst wird kein Antriebsmoment übertragen, d.h. der Motor geht in den Schubbetrieb über, wodurch sich ein sogenanntes Motorschleppmoment ergibt. Bei vielen der heutigen Fahrpedalauslegungen besteht nur die Möglichkeit, entweder über den Motor anzutreiben oder mit dem Motor in Schubabschaltung zu gehen. Der Übergang vom einen in den anderen Betriebszustand erfolgt abrupt und ist nicht dosierbar.

Aus der gattungsgemäßen deutschen Offenlegungsschrift DE 199 22 338 A1 ist ein Verfahren zum Herstellen einer vorgegebenen Wirkbeziehung zwischen der Betätigung des Fahrpedals und dem daraus resultierenden Bremsmoment eines Fahrzeugs bekannt, wobei der mögliche Verstellbereich des Fahrpedals in mindestens zwei Regelbereiche unterteilt wird. Ein erster Regelbereich wird unterhalb eines ersten vorgegebenen Fahrpedalwinkels definiert. Im ersten Regelbereich werden Stellglieder, die eine Verzögerung des Fahrzeuges bewirken können, entsprechend einem vorgegebenen Bremsmomentenverlauf geregelt. Vorzugsweise wird der zweite Regelbereich oberhalb eines zweiten vorgegebenen Fahrpedalwinkels definiert. Zwischen dem ersten und dem zweiten vorgegebenen Fahrpedalwinkel wird ein dritter Regelbereich definiert, in dem die Stellglieder, die eine Verzögerung oder eine Beschleunigung bewirken können, in der Weise geregelt werden, dass das Bremsmoment bzw. das Antriebsmoment des Fahrzeuges jeweils konstant gehalten wird.

Die US-amerikanische Patentschrift US 7 188 546 B2 offenbart eine Gaspedaleinheit für ein Fahrzeug, die ein Gaspedal umfasst, das funktionell mit einer Fahrzeug-Antriebseinrichtung verbunden ist, wobei das Fahrzeug des Weiteren ein separates Bremspedal enthält, das funktionell mit einer Fahrzeug-Bremseinrichtung verbunden ist. Wird das Gaspedal aus einer Leerlaufposition zu einer Fahrposition bewegt, wird das Fahrzeug veranlasst, die Stärke einer Antriebskraft zunehmend zu erhöhen. Dabei ist das Gaspedal so eingerichtet, dass es über einen vorgegebenen Pedalhub arbeitet, der von einer Ruheposition zu der Leerlaufposition bis hin zu einer Fahrposition reicht. Weiterhin ist das Gaspedal funktionell mit der Fahrzeugbremseinrichtung verbunden, wobei das Fahrzeug über die Bremseinrichtung veranlasst wird, die Stärke einer Bremskraft, die auf das Fahrzeug ausgeübt wird, zunehmend zu erhöhen, wenn sich das Gaspedal von der Leerlaufposition zu einer Ruheposition bewegt, wobei das Bremspedal physisch durch die Bremseinrichtung an eine Position bewegt wird, die jeweils der durch die Gaspedaleinheit ausgeübten Bremskraft entspricht, wobei das Gaspedal in Richtung der Ruheposition gespannt wird.

Aus der internationalen Patentanmeldung WO2009/ 023 916 A2 ist ein Gaspedal- und Bremssystem für ein Fahrzeug bekannt, wobei das Bremssystem auf das Gaspedal aufgebrachte Kräfte reagiert, wobei Daten, die der auf das Gaspedal aufgebrachten Kraft entsprechen, einem Regelmodul zugeleitet werden, und wobei die Bremskraft durch die auf das Gaspedal aufgebrachte Kraft beeinflusst wird.

Bei allen im Stand der Technik beschriebenen Systemen kann zwar eine Gaspedalstellung gewählt werden, bei der der Motor weder ein Antriebs-, noch ein Bremsmoment auf das Fahrzeug ausübt. Diese Gaspedalstellung ändert sich aber mit der sich beispielsweise über einen Fahrzeugausrollvorgang sich ändernden Fahrzeuggeschwindigkeit, so dass der Fahrer die Gaspedalstellung ständig nachjustieren müsste, um eine optimale Energieausnutzung mit einem möglichst geringen Treibstoffverbrauch zu erzielen.

Der Erfindung liegt die Aufgabe zugrunde, ein Verfahren zur Leistungssteuerung des Motors bereitzustellen, durch das eine Verringerung des Treibstoffverbrauchs erzielt wird.

Ferner liegt der Erfindung die Aufgabe zugrunde, eine Stellvorrichtung zur Durchführung des Verfahrens anzugeben.

Erfindungsgemäß wird diese Aufgabe gelöst durch ein Verfahren nach Anspruch 1 und eine Stellvorrichtung zur Durchführung des Verfahrens nach Anspruch 4. Vorteilhafte Weiterbildungen des Verfahrens ergeben sich aus den Ansprüchen 2 und 3. Vorteilhafte Weiterbildungen der Stellvorrichtung ergeben sich aus den Ansprüchen 5 bis 10.

Die Erfindung sieht ein Verfahren zur Leistungssteuerung eines Motors vor, insbesondere zur Leistungssteuerung eines Motors für ein Kraftfahrzeug, bei dem eine Hilfestellung zur Auffindung eines zuvor definierten Betriebszustandes geleistet wird, in dem der Motor bei geschlossenem Antriebsstrang höchstens ein geringeres als bei Einsatz der Motorbremse übliches Bremsmoment einleitet, beziehungsweise höchstens ein Antriebsmoment, das nicht zu einer Beschleunigung des Kraftfahrzeugs führt, wobei nach Aktivierung des Verfahrens durch automatische Regelung mindestens eines den Betriebszustand des Motors beeinflussenden Parameters die optimale Energiezufuhr zum Motor zum Erreichen des Betriebszustands, in dem der Motor bei geschlossenem Antriebsstrang höchstens ein geringeres als bei Einsatz der Motorbremse übliches Bremsmoment, beziehungsweise höchstens ein Antriebsmoment, das nicht zu einer Beschleunigung des Kraftfahrzeugs führt, für jede Drehzahl über einen zwischen zuvor definierten Grenzen liegenden Drehzahlbereich automatisch bestimmt und aufrecht erhalten wird. Die Erfindung sieht weiterhin eine Stellvorrichtung zur Leistungssteuerung eines Motors zur Durchführung des Verfahrens vor, die einen ersten Stellbereich vorsieht, in dem der Motor ein kontinuierliches Bremsmoment aufweist, wodurch eine Verzögerung des Fahrzeuges bewirkt werden kann, und die einen zweiten Stellbereich vorsieht, in dem der Motor ein kontinuierliches Antriebsmoment aufweist, wodurch eine Beschleunigung des Fahrzeuges bewirkt werden kann, wobei eine Hilfestellung zur Auffindung eines dritten Stellbereiches geleistet wird, wobei dieser dritte Stellbereich zwischen dem ersten Stellbereich und dem zweiten Stellbereich liegt und im dritten Stellbereich der Motor bei geschlossenem Antriebsstrang weder ein Bremsmoment noch ein Antriebsmoment einleitet.

Dies umfasst den Fall, dass ein Bremsmoment und/oder ein Antriebsmoment eingeleitet wird, wobei das Bremsmoment erheblich geringer ist als das Bremsmoment bei einer Motorbremse und dass das Antriebsmoment erheblich geringer ist als es für eine Beschleunigung eines Fahrzeugs erforderlich ist.

Dies dient vorzugsweise dazu, es zu vermeiden, dass im Zustand des Ausrollens die Motorelektronik zwischen einem leichten Antriebsmoment und einem leichten Bremsmoment wechselt.

Die Erfindung nutzt die an sich bekannte Tatsache, dass die kinetische Energie des Fahrzeugs durch eine Art Freilauffunktion besser genutzt werden kann. Der Fahrzustand ist unter anderem dadurch gekennzeichnet, dass die Antriebseinheit auf die Räder keine Leistung überträgt und damit das Fahrzeug weder antreibt noch abbremst. Dies wird beispielsweise mit einer Fliehkraftkupplung erreicht, wobei der Motor in einer zuvor definierten Fahrpedalstellung selbsttätig ausgekuppelt und in der Leerlaufdrehzahl gehalten wird. Das Fahrzeug kann dadurch eine Strecke rollen, die nicht durch den Einsatz von Kraftstoff zurückgelegt werden muss. Diese Freilauffunktion hat aber den Nachteil, dass mit ihr kein Schleppbetrieb und somit keine Kraftstoffeinsparung durch Schubabschaltung möglich ist. Entsprechend wird bei einem anderen bereits bekannten Verfahren der Motor dann ausgekuppelt, wenn der Fahrer das Fahrpedal loslässt, wobei der Fahrer einen Motorschleppbetrieb durch Antippen des Bremspedals, bzw. einer Taste am Lenkrad aktivieren kann. Dies hat den Nachteil, dass im Bereich der Bremsen ein erhöhter Verschleiß entsteht, da eine Betätigung der Bremse notwendig ist, um die Motorbremse zu aktivieren. Desweiteren ist ein Sicherheitsrisiko durch einen eventuellen Lastwechsel gegeben, der dadurch entstehen könnte, dass beispielsweise in Kurven plötzlich doch gebremst werden muss, und zur gewollten Bremskraft der Radbremsen die Motorbremse durch den Einkupplungsvorgang unkontrolliert hinzukommt. Desweiteren verlangt das Antippen des Bremspedals oder der Taste am Lenkrad vom Fahrer bei verschiedenen Fahrsituationen permanent eine aktive Entscheidung, worunter die Konzentration des Fahrers leidet.

Durch die Hilfestellung zur Auffindung des dritten Stellbereiches wird dem Fahrer die Möglichkeit gegeben, nicht nur das Antriebsmoment und das Bremsmoment, sondern auch die kinetische Energie des Fahrzeugs optimal zu nutzen. So kann beispielsweise, wenn ein Hindernis bzw. eine Verkehrseinschränkung rechtzeitig durch den Fahrzeugführer erkannt wird, die Bewegungsenergie derart ausgenutzt werden, dass durch "Rollen lassen" ohne Motorbremswirkung oder Radbremse sowie ohne Auskuppeln und somit bei vollem Kraftschluss, die gewünschte Geschwindigkeitsreduzierung erreicht wird. Auf diese Weise kann eine unnötige Energievernichtung durch die Motorbremse vermieden und Kraftstoff eingespart werden, ohne dass der Fahrzeugführer durch das Betätigen eines zusätzlichen Knopfes, Hebels oder einer Taste abgelenkt wird. Ferner sind für den Fahrzeugführer so gut wie keine Änderungen gegenüber dem ursprünglichen Fahrverhalten notwendig, so dass auch eine höhere Konzentration des Fahrers nicht notwendig ist. Die optimale Nutzung der kinetischen Energie des Fahrzeugs bei geschlossenem Antriebsstrang erfolgt somit ohne eine zusätzliche, aufwändige Mechanik und ist daher verschleißarm, kostengünstig und effizient.

Vorteilhafterweise erzeugt der Motor im dritten Stellbereich bei geschlossenem Antriebsstrang weder ein Bremsmoment noch ein Antriebsmoment, so dass der Fahrer mittels Verwendung des dritten Stellbereiches die kinetische Energie des Fahrzeugs bis hin zu einer bestimmten Schwelle optimal nutzen kann. So kann beispielsweise, wenn ein Hindernis bzw. eine Verkehrseinschränkung rechtzeitig durch den Fahrzeugführer erkannt wird, die Bewegungsenergie derart ausgenutzt werden, dass durch "Rollen lassen" ohne Motorbremswirkung oder Radbremse sowie ohne Auskuppeln, somit bei vollem Kraftschluss, die gewünschte Geschwindigkeitsreduzierung erreicht wird. Auf diese Weise kann eine unnötige Energievernichtung durch die Motorbremse vermieden und Kraftstoff eingespart werden, ohne dass der Fahrzeugführer durch das Betätigen eines zusätzlichen Knopfes, Hebels oder einer Taste abgelenkt wird.

In einer bevorzugten Ausführungsform handelt es sich bei der Stellvorrichtung um ein Pedal und/oder einen Hebel oder Drehgriff, wobei die erfindungsgemäße Hilfestellung vorzugsweise über ein Signal, welches bevorzugt akustisch, visuell und/oder taktil geleistet werden kann. Der Fahrzeugführer erhält somit ein Signal, welches beispielsweise in Form eines leisen Tones und/oder durch Aufleuchten einer kleinen LED im Cockpitbereich des Kraftfahrzeuges und/oder über einen wahrnehmbaren Druckpunkt in der Stellvorrichtung selbst erfolgen kann. Auf diese Weise kann der Fahrzeugführer die Hilfestellung leicht wahrnehmen, ohne vom Führen des Fahrzeuges abgelenkt zu werden.

In einer bevorzugten Ausführungsform kann die Hilfestellung mechanisch, hydraulisch, elektromagnetisch und/oder pneumatisch abgegeben werden, so dass verschiedene Möglichkeiten bestehen, die Hilfestellung zu leisten.

Eine vorteilhafte Ausgestaltung einer erfindungsgemäßen Stellvorrichtung besteht darin, einen vom Fahrer leicht wahrnehmbaren Druckpunkt anzuordnen, an dem die Energiezufuhr so weit abgeriegelt wird, dass keine Motorbremswirkung einsetzt. So kann beispielsweise der Druckpunkt mittels einer zusätzlichen Feder erfolgen, was den Vorteil hat, dass der bisherige Bewegungsablauf nicht verändert wird und somit auch ein Fahrzeugführer, der die erfindungsgemäße Stellvorrichtung nicht kennt, das Fahrzeug ohne Schwierigkeiten steuern kann. Desweitern kann auf diese Weise der dritte Stellbereich schnell gefunden werden, so dass auch bei kleineren Distanzen die Bewegungsenergie leicht, schnell, ungefährlich und dennoch effizient nutzbar ist.

Erfindungsgemäß handelt es sich bei dem genannten Motor um einen Motor aus der Gruppe der Verbrennungsmotoren, Elektromotoren, Dampfmotoren, Stirlingmotoren und/oder Wankelmotoren und/oder um eine Motorenkombination der genannten, wie beispielsweise einen Hybridantrieb. Auf diese Weise kann die vorliegende Erfindung zur Leistungssteuerung eines Motors, insbesondere zur Leistungssteuerung eines Motors für ein Kraftfahrzeug, verwendet werden. Generell ist jedoch eine Anwendung der vorliegenden Erfindung bei allen Motoren, die Massen bewegen müssen, wie beispielsweise bei diversen Industrieanlagen, Schiffen und/oder Industriefahrzeugen, möglich, sofern es von Vorteil ist, die vorhandene Bewegungsenergie entsprechend auszunutzen. So ist es bei einer Industrieanlage, bei der eine motorisierte Bewegung von Massen beispielsweise über eine bestimmte Strecke ausgeführt wird, vorstellbar, die Bewegung mit einer beispielsweise automatischen, rechtzeitigen Aktivierung der Freilauflauffunktion bis zum Ziel zu beenden. Somit kann die vorhandene Bewegungsenergie genutzt werden, statt diese beispielsweise über eine Bremse, wie z.B. eine Motorbremse, zu vernichten. Die jeweilige Stellvorrichtung für den Motor muss dazu um die Funktion "Freilauffunktion" erweitert werden. Erfindungsgemäß können die in den Motoren jeweils verwendeten Getriebearten, wie beispielsweise ein Automatikgetriebe, ein Halbautomatikgetriebe oder eine manuelle Schaltung derart angepasst werden, dass alle Vorteile der erfindungsgemäßen Stellvorrichtung und/oder Leistungssteuerung des Motors genutzt werden können. Durch die Verwendung bereits bekannter Motoren und der Nutzung bereits vorhandener Elemente kommt die vorliegende Erfindung ohne zusätzliche und aufwändige Mechanik aus und ist bei allen bekannten motorisierten Vorrichtungen, unabhängig von der jeweiligen Getriebeart anwendbar.

In einer bevorzugten Ausführungsform handelt es sich bei der Stellvorrichtung um ein Pedal und/oder einen Hebel und/oder Drehgriff, wobei die Stellvorrichtung leicht erkennbar und einfach zu bedienen sein muss. Vorzugsweise kann als Stellvorrichtung ein bereits bekanntes, eingebautes Element, wie beispielsweise ein Fahrpedal und/oder ein Bedienelement am Lenkrad verwendet werden, wobei aber auch die Verwendung eines neu einzubauenden Bedienelementes als Stellvorrichtung möglich ist. So ist es vorstellbar, als Stellvorrichtung beispielsweise einen Servomotor vorzusehen, der beispielsweise mit einem Navigationssystem gekoppelt ist. Die erfindungsgemäße Hilfestellung kann vorzugsweise über ein Signal, bevorzugt akustisch, visuell und/oder taktil geleistet werden. Der Fahrzeugführer erhält somit ein Signal, welches beispielsweise in Form eines leisen Tones und/oder durch Aufleuchten einer kleinen LED im Cockpitbereich des Kraftfahrzeuges und/oder über einen wahrnehmbaren Druckpunkt in der Stellvorrichtung selbst erfolgen kann. Auf diese Weise kann der Fahrzeugführer die Hilfestellung leicht wahrnehmen, ohne vom Führen des Fahrzeuges abgelenkt zu werden.

Eine vorteilhafte Ausgestaltung einer erfindungsgemäßen Stellvorrichtung besteht darin, einen vom Fahrer leicht wahrnehmbaren Druckpunkt anzuordnen, an dem die Energiezufuhr so weit abgeriegelt wird, dass keine Motorbremswirkung einsetzt. So kann beispielsweise der Druckpunkt mittels einer zusätzlichen Feder erfolgen, was den Vorteil hat, dass der bisherige Bewegungsablauf nicht verändert wird und somit auch ein Fahrzeugführer, der die erfindungsgemäße Stellvorrichtung nicht kennt, das Fahrzeug ohne Schwierigkeiten steuern kann. Desweitern kann auf diese Weise der dritte Stellbereich schnell gefunden werden, so dass auch bei kleineren Distanzen die Bewegungsenergie leicht, schnell, ungefährlich und dennoch effizient nutzbar ist.

Erfindungsgemäß leitet der Motor am Druckpunkt bzw. in dem dritten definierten Stellbereich, unabhängig von der Geschwindigkeitsstufe, der Übersetzung, der Drehzahl und der Kupplungsstellung, weder ein Bremsmoment noch ein Antriebsmoment ein, so dass der Motor unabhängig von den genannten Parametern bei vollem Kraftschluss keinerlei Kraft auf den Antriebsstrang des Fahrzeuges überträgt und die vorhandene Bewegungsenergie in jeder Fahrsituation mit Erreichen des dritten Stellbereiches voll ausgenutzt werden und Kraftstoff eingespart werden kann. Grundsätzlich ist eine Kombination der erfindungsgemäßen Stellvorrichtung mit bisher bekannten Systemen, wie beispielsweise einem Drehzahlbegrenzer oder einem Tempomat möglich.

Das erfindungsgemäße Verfahren zur Leistungssteuerung eines Motors, insbesondere zur Leistungssteuerung eines Motors für ein Kraftfahrzeug, sieht vor, dass wenigstens eine Hilfestellung zur Auffindung eines zuvor definierten Betriebszustandes geleistet wird, in dem der Motor bei geschlossenem Antriebsstrang weder ein Bremsmoment noch ein Antriebsmoment einleitet oder dass wenigstens eine Hilfestellung geleistet wird, wenn sich eine Stellvorrichtung zur Leistungssteuerung eines Motors in einem Stellbereich befindet, in dem der Motor den zuvor definierten Betriebszustand aufweist. Hierbei wird davon ausgegangen, dass dem Fahrzeugführer ein dritter Stellbereich zur Verfügung gestellt wird, welchen er nutzen kann, wenn er weder ein Antriebsmoment noch ein Bremsmoment wünscht. Der dritte Stellbereich ermöglicht dem Fahrzeugführer somit, das Fahrzeug ausrollen zu lassen, ohne dass ein Antriebsmoment oder ein Bremsmoment in den Antriebsstrang eingeleitet wird. Auf diese Weise kann eine unnötige Energievernichtung durch die Motorbremse vermieden und Kraftstoff eingespart werden, ohne dass der Fahrzeugführer durch das Betätigen eines zusätzlichen Knopfes, Hebels oder einer Taste abgelenkt wird. Für den Fahrzeugführer sind bei dem erfindungsgemäßen Verfahren keine gravierenden Änderungen gegenüber dem ursprünglichen Fahrverhalten notwendig. Die optimale Nutzung der kinetischen Energie des Fahrzeugs bei geschlossenem Antriebsstrang erfolgt somit ohne eine zusätzliche, aufwändige Mechanik und ist daher verschleißarm, kostengünstig und effizient. Ferner kann der dritte Stellbereich über die Hilfestellung leicht vom Fahrzeugführer aufgefunden und gehalten werden, wobei der dritte Stellbereich genauso groß, bzw. klein definiert ist, dass beim Ausrollen ein Pendeln zwischen Antrieb und Verzögerung vermieden werden und Kraftstoff eingespart werden kann.

In einer besonders bevorzugten Ausführungsform des Verfahrens wird der zuvor definierte Betriebszustand durch wenigstens einen Sensor erkannt, so dass ein mit dem Sensor verbundenes Steuersystem wenigstens eine Hilfestellung zur Auffindung des zuvor definierten Betriebszustandes leistet. Vorteilhafterweise erhält das Steuersystem über diesen wenigstens einen Sensor alle wichtigen Parameter, wie beispielsweise den eingelegten Gang, bzw. die Stellung der Automatikschaltung, die vorhandene Drehzahl und/oder die Leerlaufdrehzahl, die zur Regelung des Motors notwendig sind. Auf diese Weise wird ermöglicht, dass der Fahrzeugführer immer dann eine Hilfestellung über das Steuersystem erhält, wenn der Motor den zuvor definierten Betriebszustand erreicht, in dem der Motor bei geschlossenem Antriebsstrang weder ein Bremsmoment noch einen Antriebsmoment einleitet bzw. wenn sich die Stellvorrichtung in einem dritten Stellbereich befindet, in dem der Motor einen zuvor definierten Betriebszustand aufweist. Hierzu werden die entsprechenden Parameter, wie beispielsweise die Geschwindigkeit und/oder die Motordrehzahl ständig überwacht. So kann das Steuersystem eine erfindungsgemäße Hilfestellung mittels eines leicht vom Fahrzeugführer wahrnehmbaren Signals leisten, welches bevorzugt akustisch, in Form eines leisen Tones, und/oder visuell, durch Aufleuchten einer kleinen LED im Cockpitbereich des Kraftfahrzeuges und/oder taktil, beispielsweise über einen wahrnehmbaren Druckpunkt in der Stellvorrichtung selbst, wobei es sich als Vorteil erweist, dass der genannte Druckpunkt mechanisch, hydraulisch, elektromagnetisch und/oder pneumatisch erzeugt werden kann.

Es hat sich als besonders vorteilhaft herausgestellt, dass das Steuersystem eine Mehrzahl von Stellgliedern aufweist, die eine Verzögerung oder eine Beschleunigung des Fahrzeugs bewirken können, so dass bei Erreichen des dritten Stellbereiches diverse Parameter derart geregelt werden, dass die kinetische Energie des Fahrzeugs so lange wie möglich ausgenutzt werden kann. So wird beispielsweise die notwendige Kraftstoffzufuhr, welche unter anderem abhängig ist von der Geschwindigkeit des bewegten Fahrzeuges, entsprechend erhöht bzw. verringert oder das Antriebsmoment entsprechend der jeweiligen Fahrsituation und in Abhängigkeit von dem jeweils eingelegten Gang soweit wie möglich herabgesetzt, um die kinetische Energie des Fahrzeugs so lange wie möglich auszunutzen. Ferner regelt das Steuersystem auch, dass beim anschließenden Erreichen des zweiten Stellbereiches das Antriebsmoment, bzw. die Kraftstoffzufuhr entsprechend der jeweiligen Fahrsituation und in Abhängigkeit von dem jeweils eingelegten Gang wieder kontinuierlich erhöht wird.

Bei einem Verlassen einer Schnellfahrstraße z. B. einer Autobahn, wird der Zustand des Ausrollens dadurch erzeugt, dass der Motor in einen Zustand versetzt wird, der im Wesentlichen weder ein Antriebsmoment noch ein Bremsmoment erzeugt Dies erfolgt vorzugsweise durch einen gezielten Eingriff in die Motorelektronik.

Die Regelung des Motors kann über die Steuerung der Nockenwelle, die Anpassung der Steuerzeiten der Ventile, die Regelung des Einspritzdruckes oder der Einspritzintervalle bei Mehrfacheinspritzungen, die Steuerung des Zündzeitpunktes oder der Zündintervalle bei Mehrfachzündungen oder die Reglung von Zündungen z.B. bei mehr als einer Zündkerze pro Zylinder geschehen, wobei der Einsatz der Regelung vom Betriebszustand des Motors, beispielsweise der Motor- oder Öltemperatur, abhängig gemacht werden kann.

Grundsätzlich ist eine Kombination der vorliegenden Erfindung mit verschiedenen bereits bekannten Verfahren denkbar. So könnte beispielsweise das erfindungsgemäße Verfahren mit einem Navigationssystem verknüpft werden, so dass beispielsweise dem Fahrer immer dann eine Hilfestellung zur Auffindung des dritten Stellbereiches gegeben wird, wenn er sich einem Verkehrshindernis, wie zum Beispiel einer Ampel, einer Kreuzung, einer Autobahnabfahrt oder einem gemeldeten Stau nähert, und die Bewegungsenergie des Fahrzeugs gerade ausreichen würde, das genannte Hindernis ohne zusätzliche Antriebsleistung oder Gebrauch der Motorbremse oder Radbremse zu erreichen. Wurde die Hilfestellung gegeben, liegt die Entscheidung nach wie vor beim Fahrer, ob er von der Funktion Gebrauch machen und Kraftstoff einsparen möchte. Ebenfalls ist denkbar, dass die Stellvorrichtung automatisch, d.h. mithilfe des Steuersystems in den dritten Stellbereich versetzt wird, ohne dass der Fahrer diese Entscheidung trifft.

Die Erfindung kann weiterhin mit einem Geschwindigkeitsregelsystem (Tempomat) oder einem beispielsweise GPS-gestützten Autopilot kombiniert werden. So kann bei einem Überschreiten der Sollgeschwindigkeit nicht die Schubabschaltung, sondern die Erfindung eingesetzt werden. Es kann eine Bandbreite um die Sollgeschwindigkeit (beispielsweise +/-5km/h bei einer Sollgeschwindigkeit von 130 km/h) festgelegt werden, innerhalb der nur mit der Erfindung die Geschwindigkeit nach unten geregelt wird. Wird der definierte Bereich beispielsweise innerhalb eines großen Gefälles überschritten, wird die Schubabschaltung aktiviert. Alternativ oder zusammen mit der Geschwindigkeitsbandbreite kann auch eine Bandbreite an eine, beispielsweise durch ein Straßengefälle hervorgerufene, Beschleunigung des Fahrzeugs festgelegt werden, innerhalb der die Erfindung zur Reduzierung oder dem Beibehalten der Geschwindigkeit eingesetzt wird. Die Bandbreiten können bei verschiedenen Geschwindigkeiten und Einsatzbedingungen unterschiedlich definiert werden.

Daneben kann die Erfindung auch mit dem Prinzip der Zylinderabschaltung kombiniert werden. Gleichzeitig können bei den abgeschalteten Zylindern die Ventile geschlossen gehalten werden. Des Weiteren können bei mehr als einem Ventil pro Einlass- oder Auslassventilgruppe diese innerhalb der Gruppe unterschiedlich geregelt werden.

Das Steuergerät kann mittelbar, beispielsweise über andere Steuergeräte oder ein Zentralsteuergerät, oder unmittelbar, beispielsweise über ein Regelinstrument zur Erhöhung oder Senkung der Einspritzung, der Luftbeimischung oder des Verstellmechanismus der Nockenwelle, der Zündung oder der elektromechanischen Betätigung von Ventilen, unterschiedliche Schnittstellen zu den zu regelnden Einheiten aufweisen.

Im Steuergerät können Signale von Sensoren (z.B. Stellung des Fahrpedals, Drehzahl oder Geschwindigkeit) erfasst und geprüft werden. Entsprechen diese Werte oder die Kombination von Werten oder das Ergebnis eines elektronischen Verarbeitungsprozesses von Werten oder einer Kombination von Werten einer Vorgabe, die in einem Speicher im Steuergerät abgelegt ist oder die aus aktuellen Werten oder einer Kombination oder dem Ergebnis deren Verknüpfung errechnet ist, so wird der zu regelnden Einheit über die Schnittstelle ein bestimmter Einstellungswert zugewiesen (z.B. eine bestimmte Steuerzeit für ein Ventil, wenn sich das Fahrpedal während einer bestimmten Drehzahl im Bereich Freilauffunktion befindet).

Die vorgegebenen Werte im Speicher des Steuergerätes können fest einprogrammiert sein oder durch speziellen Eingriff (z.B. Diagnosegerät oder eine spezielle Software über eine Serviceschnittstelle) veränderbar oder vom Fahrer beeinflussbar sein (z.B. Auswahl von Fahrmodi oder die Fahrpedalstellung).

Die gespeicherten Werte können auch von Sensoren oder als Ergebnis verschiedener verarbeiteter Werte einer Software oder eines festen Programms beeinflusst oder vergeben werden. Das bedeutet, sie können einer permanenten Veränderbarkeit unterliegen.

Im Freilaufbereich wird der Motor so geregelt, dass mindestens ein Nullmoment anliegt, d.h. ein kleines positives Moment wird zugelassen, jedoch kein negatives. Dabei kann beispielsweise vorgesehen sein, dass ein möglichst kleines Drehmoment in Höhe von beispielsweise 5% des Maximaldrehmomentes des Motors an den Antriebsstrang abgegeben wird. Dadurch wird ein Pendeln des Drehmoments um den Nullpunkt mit Ausschlägen sowohl in den negativen als auch den positiven Bereich verhindert. Ein solches Pendeln des Drehmoments könnte zu unkomfortablen Fahrzuständen führen. Zur Vermeidung kann das Steuergerät zur Regelung des Nullmoments so ausgelegt werden, dass dieses immer ausgehend von einem mindestens positiven Drehmoment den Motor gegen das Nullmoment regelt. Das bedeutet, dass unter dem Begriff Nullmoment auch ein geringes positives Drehmoment verstanden wird. Falls der Fahrer das Fahrpedal vom Bereich Schubabschaltung kommend in den Bereich Nullmoment bewegt, wird das Drehmoment von einem negativen Drehmoment kommend gegen das Nullmoment geregelt. Dabei ist eine Überschreitung des Mindestdrehmoments, beispielsweise um 0,5% des Maximaldrehmoments, während der Nullmomentregelung zu vermeiden, damit der Motor nicht ständig zwischen leichtem positivem Drehmoment und einem Bremsmoment im Bereich Schubabschaltung hin und her wechselt, wenn der Fahrer zur Regelung der Verzögerung zwischen dem Bereich Schubabschaltung und Nullmoment oder bei Fehlen des Bereichs Nullmoment dem Bereich Antrieb hin und her wechselt.

Es kann auch vorgesehen sein, dass die Regelung nach individueller Auswahl des Fahrers zugeschaltet wird.

Der Übergang vom geregelten Bereich des Nullmoments zu einem negativen Moment zur Schubabschaltung kann so ausgelegt werden, dass er vom Fahrer dosierbar ist.

Die Regelung kann auch so ausgelegt werden, dass sie für bestimmte Drehzahl-, Geschwindigkeits- und Übersetzungsverhältnisse ausgeschlossen ist.

Die Erfindung kann auch so ausgeführt werden, dass bei eingeschalteter Regelung bei einer Gaspedalstellung im Bereich "Antrieb" mindestens das Nullmoment von dem Motor an die Antriebseinheit übergeben wird, d.h., dass unabhängig von der Pedalstellung innerhalb dieses Bereichs keinesfalls ein Bremsmoment anliegt. Der Vorteil dieser Ausführungsform liegt darin, dass ein Druckpunkt im Pedal oder andere Signalisierungsmöglichkeiten nicht erforderlich sind und entfallen können. Damit könnte eine Betriebszulassung einfacher erreichbar sein. Sobald die Bedingung "mindestens Nullmoment" eingetreten ist, ist es auch vorstellbar, einen mindestens von der gefahrenen Geschwindigkeit abhängenden Bereich um die dem Nullmoment entsprechende Gaspedalstellung zu definieren, in dem sich das Gaspedal befinden kann, ohne eine Beschleunigung des Fahrzeugs zu bewirken und den Bereich des Nullmoments zu Verlassen. Dieser geschwindigkeitsabhängige Bereich wird kleiner, je niedriger die gefahrene Geschwindigkeit ist. In diesem Fall wird das Fahrzeug erst dann beschleunigt, wenn das Gaspedal über diesen Bereich hinaus in Richtung Antrieb bewegt wird. Der Vorteil hiervon ist, dass der Fahrer den Zustand des Nullmoments bequem halten kann. Der Bereich wird nach dem einmaligen Verlassen gelöscht und wieder neu definiert, sobald das Nullmoment erneut anliegt.

Die Erfindung kann auch dann ausgeführt werden, wenn ein Druckpunkt im Gaspedal beziehungsweise ein anderes, leicht vom Fahrer zu findendes Zeichen zur Anzeige der Nullmomentenstellung nicht praktikabel oder umsetzbar ist. Dabei kann die Fahrpedalkennung konventionell in die zwei Bereiche der Schubabschaltung und des Antriebs unterteilt sein, ohne dass es ein Zeichen des Übergangs von einem in den anderen Bereich gibt. Die Nullmomentregelung wird dabei immer dann im Bereich Antrieb aktiviert, wenn sich das Fahrpedal an einer Stelle befindet, wo weniger Antrieb als das Nullmoment geliefert wird. Sobald sich das Fahrpedal an einer Stelle befindet, wo das Nullmoment überschritten wird, wird der Antrieb wieder aktiviert. Beide Regelungen können auftreten, obwohl sich das Fahrpedal an der gleichen Stelle befindet, wenn das Fahrzeug beispielsweise von einem Gefällstück kommend wieder eine Steigung hinauf fährt. Der Bereich Antrieb wird also so geregelt, dass dort immer mindestens das Nullmoment herrscht. Es kann also hier innerhalb von definierten Drehzahlgrenzen nie ein Bremsmoment des Motors entstehen. Wenn der Fahrer das Fahrpedal im Bereich Antrieb so weit zurücknimmt, dass das Nullmoment unterschritten würde, wird die Regelung aktiviert und mindestens das Nullmoment an den Antriebsstrang übergeben.

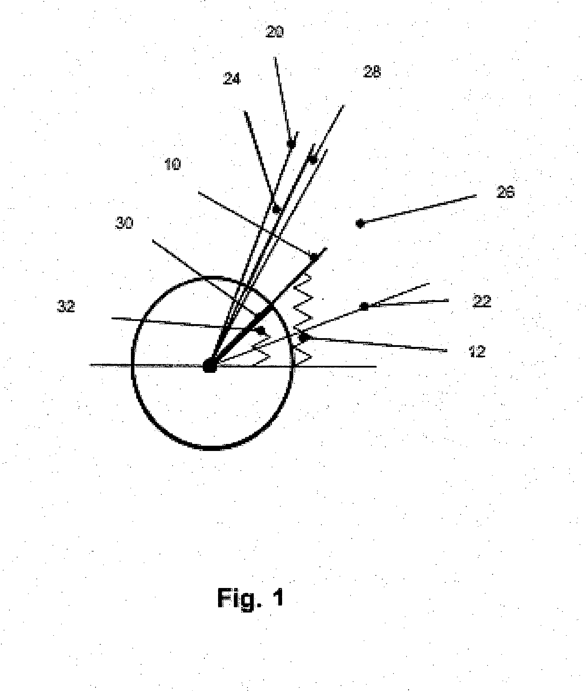

Nachfolgend wird die Erfindung unter Bezugnahme auf die anliegenden Zeichnungen näher erläutert: Weitere Vorteile und Ausführungen ergeben sich aus den Ansprüchen. Dabei zeigt die einzige Figur 1 eine:
schematische Anordnung einer erfindungsgemäßen Stellvorrichtung

Die in Figur 1 dargestellte erfindungsgemäße Stellvorrichtung weist ein herkömmliches Pedal 10 auf, welches zur Leistungssteuerung eines Motors verwendet wird. Das Pedal 10 kann unter Verwendung eines ersten Federelementes 12 variabel zwischen einer ersten Endposition 20 und einer zweiten Endposition 22 verstellt werden. Zwischen diesen beiden Endpositionen 20, 22 befindet sich ein erster Stellbereich 24, in dem der Motor ein kontinuierliches Bremsmoment aufweist, wodurch eine Verzögerung des Fahrzeuges bewirkt werden kann, und ein zweiter Stellbereich 26, in dem der Motor ein kontinuierliches Antriebsmoment aufweist, wodurch eine Beschleunigung des Fahrzeuges bewirkt werden kann. Zwischen diesen beiden Stellbereichen 24, 26 befindet sich ein dritter Stellbereich 28, in dem der Motor einen zuvor definierten Betriebszustand aufweist. Dieser Betriebszustand könnte beispielsweise genau der Betriebspunkt sein, bei dem der Motor bei geschlossenem Antriebsstrang weder ein Bremsmoment noch ein Antriebsmoment einleitet. Um die Auffindung des dritten Stellbereiches zu erleichtern, weist die dargestellte Ausführungsform ein zweites Hilfspedal 30 auf, welches sich unterhalb des ersten Pedals 10 befindet. Im Gegensatz zu Pedal 10 ist das Hilfspedal 30 unter Verwendung eines zweiten Federelementes 32 lediglich zwischen dem dritten Stellbereich 28 und der zweiten Endposition 22 variabel verstellbar, was zur Folge hat, dass bei einer Betätigung des Pedals 10 im ersten Stellbereich 24 nur das erste Federelement 12 eine Rückstellkraft auf das Pedal 10 ausübt. Erreicht das Pedal 10 den dritten Stellbereich 28, legt sich das Pedal 10 unmittelbar auf das Hilfspedal 30, so dass zu der bereits vorhandenen Rückstellkraft des ersten Federelementes 12 die Rückstellkraft des zweiten Federelementes 32 hinzukommt, wodurch sich eine für den Fahrzeugführer leicht festzustellende Hilfestellung in Form eines leicht wahrnehmbaren Druckpunktes zur Auffindung des dritten Stellbereiches 28 ergibt.

Die Zeichnung offenbart und beschreibt eine exemplarische Ausführung der vorliegenden Erfindung, andere verbindende mechanische Anordnungen sind ebenfalls möglich. Die Erfindung ist nicht auf das beschriebene Ausführungsbeispiel beschränkt, es dient lediglich der Verdeutlichung der Erfindung.

### Bezugszeichen:

- 10: Pedal
- 12: erstes Federelement
- 20: erste Endposition
- 22: zweite Endposition
- 24: erster Stellbereich
- 26: zweiter Stellbereich
- 28: dritter Stellbereich
- 30: Hilfspedal
- 32: zweites Federelement

## Patentansprüche

1. Verfahren zur Leistungssteuerung eines Motors, insbesondere zur Leistungssteuerung eines Motors für ein Kraftfahrzeug, bei dem eine Hilfestellung zur Auffindung eines zuvor definierten Betriebszustandes geleistet wird, in dem der Motor bei geschlossenem Antriebsstrang höchstens ein geringeres als bei Einsatz der Motorbremse übliches Bremsmoment, beziehungsweise höchstens ein Antriebsmoment, das nicht zu einer Beschleunigung des Kraftfahrzeugs führt, einleitet,
**dadurch gekennzeichnet,**
**dass** nach Aktivierung des Verfahrens durch automatische Regelung mindestens eines den Betriebszustand des Motors beeinflussenden Parameters die optimale Energiezufuhr zum Motor zum Erreichen des Betriebszustands, in dem der Motor bei geschlossenem Antriebsstrang höchstens ein geringeres als bei Einsatz der Motorbremse übliches Bremsmoment, beziehungsweise höchstens ein Antriebsmoment, das nicht zu einer Beschleunigung des Kraftfahrzeugs führt oder zum Beibehalten der momentanen Geschwindigkeit des Fahrzeugs erforderlich wäre, für jede Drehzahl über einen zwischen zuvor definierten Grenzen liegenden Drehzahlbereich automatisch bestimmt und aufrecht erhalten wird.

2. Verfahren nach Anspruch 1,
**dadurch gekennzeichnet,**
**dass** der zuvor definierte Betriebszustand durch wenigstens einen Sensor erkannt wird, woraufhin ein mit dem Sensor verbundenes Steuersystem die wenigstens eine Hilfestellung zur Auffindung des zuvor definierten Betriebszustandes leistet.

3. Verfahren nach Anspruch 2,
**dadurch gekennzeichnet,**
**dass** das Steuersystem eine Mehrzahl von Stellgliedern aufweist, die eine Verzögerung oder eine Beschleunigung des Motors bewirken können.

4. Stellvorrichtung zur Durchführung des Verfahrens nach einem der Ansprüche 1 bis 3, aufweisend einen ersten Stellbereich (24), in dem der Motor ein kontinuierliches Bremsmoment aufweist, wodurch eine Verzögerung des Fahrzeuges bewirkt werden kann, und einen zweiten Stellbereich (26), in dem der Motor ein kontinuierliches Antriebsmoment aufweist, wodurch eine Beschleunigung des Fahrzeuges bewirkt werden kann,
**dadurch gekennzeichnet,**
**dass** eine Hilfestellung zur Auffindung eines dritten Stellbereiches (28) geleistet wird, wobei dieser dritte Stellbereich (28) zwischen dem ersten Stellbereich (24) und dem zweiten Stellbereich (26) liegt und im dritten Stellbereich (28) der Motor bei geschlossenem Antriebsstrang weder ein Bremsmoment noch ein Antriebsmoment einleitet und dass die Stellvorrichtung über ein Mittel zur automatischen Bestimmung und Aufrechterhaltung der optimalen Energiezufuhr zum Motor zur Aufrechterhaltung des Betriebszustands des dritten Stellbereichs (28) für jede Drehzahl über einen zwischen zuvor definierten Grenzen liegenden Drehzahlbereich verfügt.

5. Stellvorrichtung nach Anspruch 4,
**dadurch gekennzeichnet,**
**dass** der Motor ein Motor aus der Gruppe Verbrennungsmotor, Elektromotor, Dampfmotor, Stirlingmotor und/oder Wankelmotor und/oder eine Motorenkombination der genannten, wie beispielsweise ein Hybridantrieb ist.

6. Stellvorrichtung nach Anspruch 4 oder 5,
**dadurch gekennzeichnet,**
**dass** die Stellvorrichtung ein Pedal (10) und/oder ein Hebel oder Drehgriff ist.

7. Stellvorrichtung nach einem der Ansprüche 4 bis 6,
**dadurch gekennzeichnet,**
**dass** die Hilfestellung über ein Signal geleistet wird.

8. Stellvorrichtung nach einem der Ansprüche 4 bis 7,
**dadurch gekennzeichnet,**
**dass** die Hilfestellung akustisch, visuell und/oder taktil abgegeben wird.

9. Stellvorrichtung nach einem der Ansprüche 4 bis 8,
**dadurch gekennzeichnet,**
**dass** die Hilfestellung mechanisch, hydraulisch, elektromagnetisch und/oder pneumatisch gegeben wird.

10. Stellvorrichtung nach einem der Ansprüche 4 bis 9,
**dadurch gekennzeichnet,**
**dass** die Hilfestellung ein zuvor festgelegter Druckpunkt ist.

## Claims

1. A method for controlling the power of an engine, especially for controlling the power of an internal combustion engine for a motor vehicle, in which assistance is provided for locating a previously defined operating state in which the engine, with the drive train closed, introduces a braking torque that, at the maximum, is less than the braking torque that is normally present when the engine brake is used, or else a drive torque that, at the maximum, does not lead to an acceleration of the vehicle,
**characterized in that**
after the method has been activated by the automatic regulation of at least one parameter that influences the operating state of the engine, the optimal energy supply to the engine - which is needed in order to achieve the operating state in which the engine, with the drive train closed, introduces a braking torque that, at the maximum, is less than the braking torque that is normally present when the engine brake is used, or else a drive torque that, at the maximum, does not lead to an acceleration of the vehicle or that would be needed to maintain the momentary speed of the vehicle - is automatically determined and maintained for each rotational speed over a rotational speed range that lies between previously defined limits.

2. The method according to claim 1,
**characterized in that**
the previously defined operating state is recognized by at least one sensor, after which a control system associated with the sensor provides the at least one type of assistance for locating the previously defined operating state.

3. The method according to claim 2,
**characterized in that**
the control system has a plurality of actuators that can effectuate a deceleration or an acceleration of the engine.

4. A control device for carrying out the method according to one of claims 1 to 3, having a first control range (24) in which the engine has a continuous braking torque, as a result of which the vehicle can be decelerated, and having a second control range (26) in which the engine has a continuous drive torque, as a result of which the vehicle can be accelerated,
**characterized in that**
assistance is provided for locating a third control range (28), whereby this third control range (28) is situated between the first control range (24) and the second control range (26), and, in the third control range (28), the engine - with the drive train closed - introduces neither a braking torque nor a drive torque, and **in that** the control device has a means to automatically determine and maintain the optimal energy supply to the engine in order to maintain the operating state of the third control range (28) for each rotational speed over a rotational speed range that lies between previously defined limits.

5. The control device according to claim 4,
**characterized in that**
the engine is an engine from the group of internal combustion engines, electric motors, steam engines, Stirling engines and/or Wankel engines and/or a combination of the listed engines such as, for instance, a hybrid drive.

6. The control device according to claim 4 or 5,
**characterized in that**
the control device is a pedal (10) and/or a lever or a knob.

7. The control device according to one of claims 4 to 6,
**characterized in that**
the assistance is provided via a signal.

8. The control device according to one of claims 4 to 7,
**characterized in that**
the assistance is provided in a manner that is acoustic, visual and/or tactile.

9. The control device according to one of claims 4 to 8,
**characterized in that**
the assistance is provided mechanically, hydraulically, electromagnetically and/or pneumatically.

10. The control device according to one of claims 4 to 9,
**characterized in that**
the assistance is a previously defined pressure point.

## Revendications

1. Procédé de commande de puissance d'un moteur, en particulier de commande de puissance d'un moteur pour un véhicule automobile, selon lequel est fournie une aide pour détecter un état de service défini préalablement, dans lequel le moteur introduit, lorsque la chaîne cinématique est fermée, au maximum un couple de freinage inférieur au couple de freinage habituel lors de la mise en oeuvre du frein de moteur resp. au maximum un couple d'entraînement qui n'entraîne pas une accélération du véhicule automobile, **caractérisé en ce que**, après l'activation du procédé par réglage automatique d'au moins un paramètre qui influence l'état de service du moteur, l'apport d'énergie optimal au moteur pour atteindre l'état de service dans lequel le moteur introduit, lorsque la chaîne cinématique est fermée, au maximum un couple de freinage inférieur au couple de freinage habituel lors de la mise en oeuvre du frein de moteur resp. au maximum un couple d'entraînement qui n'entraîne pas une accélération du véhicule automobile ou qui serait nécessaire pour maintenir la vitesse instantanée du véhicule automobile, est déterminé et maintenu automatiquement pour tout régime au-delà d'une plage de régime située entre des limites définies préalablement.

2. Procédé selon la revendication 1, **caractérisé en ce que** l'état de service défini préalablement est reconnu par au moins un capteur, suite à quoi un système de commande relié au capteur fournit au moins une aide pour détecter l'état de service défini préalablement.

3. Procédé selon la revendication 2, **caractérisé en ce que** le système de commande présente une pluralité d'organes de réglage qui peuvent provoquer une décélération ou une accélération du moteur.

4. Dispositif de réglage permettant d'exécuter le procédé selon l'une des revendications 1 à 3, présentant une première plage de réglage (24) dans laquelle le moteur présente un couple de freinage continu, ce qui peut provoquer une décélération du véhicule automobile, et une deuxième plage de réglage (26) dans laquelle le moteur présente un couple d'entraînement continu, ce qui peut provoquer une accélération du véhicule automobile, **caractérisé en ce qu'**est fournie une aide pour détecter une troisième plage de réglage (28), cette troisième plage de réglage (28) se trouvant entre la première plage de réglage (24) et la deuxième plage de réglage (26), et le moteur, dans la troisième plage de réglage (28), n'introduisant, lorsque la chaîne cinématique est fermée, ni un couple de freinage ni un couple d'entraînement, et **en ce que** le dispositif de réglage dispose d'un moyen pour déterminer et maintenir automatiquement l'apport d'énergie optimal au moteur pour maintenir l'état de service de la troisième plage de réglage (28) pour tout régime au-delà d'une plage de régime située entre des limites définies préalablement.

5. Dispositif de réglage selon la revendication 4, **caractérisé en ce que** le moteur est un moteur du groupe des moteurs à combustion interne, électrique, à vapeur, Stirling et/ou Wankel et/ou une combinaison desdits moteurs, telle que, par exemple, un entraînement hybride.

6. Dispositif de réglage selon la revendication 4 ou 5, **caractérisé en ce que** le dispositif de réglage est une pédale (10) et/ou un levier ou une poignée rotative.

7. Dispositif de réglage selon l'une des revendications 4 à 6, **caractérisé en ce que** l'aide est fournie par l'intermédiaire d'un signal.

8. Dispositif de réglage selon l'une des revendications 4 à 7, **caractérisé en ce que** l'aide est fournie sous forme acoustique, optique et/ou tactile.

9. Dispositif de réglage selon l'une des revendications 4 à 8, **caractérisé en ce que** l'aide est fournie sous forme mécanique, hydraulique, électromagnétique et/ou pneumatique.

10. Dispositif de réglage selon l'une des revendications 4 à 9, **caractérisé en ce que** l'aide est un point de pression fixé préalablement.
